(19) Europäisches Patentamt
European Patent Office
Office européen des brevets

(11) **EP 1 828 938 B1**

(12) **FASCICULE DE BREVET EUROPEEN**

(45) Date de publication et mention
de la délivrance du brevet:
**22.02.2012 Bulletin 2012/08**

(21) Numéro de dépôt: **05850581.9**

(22) Date de dépôt: **20.12.2005**

(51) Int Cl.:
***G06F 17/30*** *(2006.01)*

(86) Numéro de dépôt international:
**PCT/FR2005/003240**

(87) Numéro de publication internationale:
**WO 2006/070112 (06.07.2006 Gazette 2006/27)**

(54) **PROCEDE ET SYSTEME POUR L'OPTIMISATION DE LA GESTION DE FICHIERS A ENREGISTREMENTS**

VERFAHREN UND SYSTEM ZUR OPTIMIERUNG DER VERWALTUNG VON AUFZEICHNUNGSDATEIEN

METHOD AND SYSTEM FOR OPTIMIZING MANAGEMENT OF RECORD FILES

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **24.12.2004 FR 0413906**

(43) Date de publication de la demande:
**05.09.2007 Bulletin 2007/36**

(73) Titulaire: **Trusted Logic**
**92190 Meudon (FR)**

(72) Inventeur: **BOUCHY, Frédéric**
**F-78450 Villepreux (FR)**

(56) Documents cités:
**WO-A-2004/040454      US-A- 5 937 425**

## Description

La présente invention concerne un procédé pour l'optimisation de la gestion de fichiers à enregistrements.

Elle a plus particulièrement pour but d'améliorer les performances relatives à la gestion de fichiers lorsque les enregistrements desdits fichiers sont stockés sur une mémoire persistante pour laquelle les opérations d'écriture sont coûteuses en temps d'exécution.

Elle s'applique notamment mais non exclusivement au domaine de la carte à puce pour lequel les enregistrements sont écrits en mémoire non-volatile de type EEPROM ou FlashROM.

D'une manière générale, on sait que certains dispositifs, comme la carte à puce, disposent de mémoire persistante (par exemple EEPROM ou FlashROM) organisée en pages. Dans ces dispositifs, la gestion de fichiers utilise de la mémoire persistante pour stocker des fichiers, les données persistantes de chaque fichier sont constituées :

o d'un descripteur de fichier qui contient des informations de structure comme, par exemple, l'identifiant du fichier, ses droits d'accès, le nombre maximal d'enregistrements du fichier, la localisation en mémoire de l'espace réservé aux enregistrements du fichier, le nombre total d'enregistrements du fichier, la taille des différents enregistrements (ou la taille de chaque enregistrement si celle-ci est commune à tous les enregistrements), et la position du dernier enregistrement ajouté dans le cas d'un fichier cyclique; on appelle ces informations de manière générale des « Informations de Gestion de Fichiers » ou « IGF ».

o du contenu des enregistrements dudit fichier;

La gestion des enregistrements comme, par exemple, l'ajout d'un enregistrement à un fichier, peut nécessiter la modification de certaines informations des IGF (et donc du descripteur de fichier), comme le nombre d'enregistrements effectifs du fichier ou la position du dernier enregistrement ajouté dans le cas d'un fichier cyclique.

Le descripteur de fichier est stocké dans une ou plusieurs pages différentes des pages servant au stockage du contenu des enregistrements.

L'opération d'écriture d'une page étant coûteuse en temps d'exécution, il est important, lors des mises à jour d'un fichier, de minimiser le nombre de pages à écrire.

Dans ce but, l'invention propose un procédé selon lequel on fait en sorte que l'organisation en mémoire persistante des IGF et des enregistrements minimise le nombre d'écritures de pages lors d'opérations de modifications dudit fichier. Le procédé mis en oeuvre est basé sur une représentation de certaines informations de gestion de fichiers dits IGF telle qu'une partie de ces IGF puisse être inscrite dans des zones de mémoire contiguës aux enregistrements eux-mêmes (plutôt que regroupées, comme c'est le cas actuellement, dans le descripteur de fichier).

Ce procédé selon l'invention comprend alors :

a) l'inscription de certaines informations de gestion de fichiers, dites IGF, dans des zones de mémoire contiguës aux enregistrements du fichier ;
b) l'utilisation des IGF lors des opérations d'accès au fichier ;
c) la mise à jour de certaines IGF lors des opérations de modification de fichier.

Avantageusement :

- lesdits fichiers pourront consister en des fichiers cycliques et lesdites IGF pourront comporter des informations permettant de calculer la position du dernier enregistrement ajouté et/ou le nombre d'enregistrements effectifs et/ou la localisation en mémoire d'un enregistrement de fichier.
- l'IGF associée à un enregistrement de position i dans le fichier pourra, dans le cas d'un fichier cyclique, comporter une information Inf[i] positionnée initialement à zéro et modifiée, lors de l'ajout d'un nouvel enregistrement à la position i en appliquant le calcul Inf[i] := 1 + (Inf[i] mod $N_{MAX}$), $N_{MAX}$ étant le nombre maximal d'enregistrements dans le fichier cyclique.
- les enregistrements du fichier pourront être répartis en mémoire de sorte que la zone de mémoire contenant un enregistrement d'une taille *t* ne chevauche jamais plus de *[(t/m)]* pages physiques où *m* représente la taille d'une page physique et *[(t/m)]* désigne la plus petite valeur entière supérieure ou égale à *t/m*.
- la lecture d'un enregistrement de numéro *n* pourra comporter l'utilisation des IGF pour calculer le nombre d'enregistrements du fichier et la position de l'enregistrement *n*.
- l'ajout d'un nouvel enregistrement pourra comporter l'utilisation des IGF pour calculer la position du prochain emplacement disponible
- la mise à jour d'un enregistrement de numéro n pourra comporter l'utilisation des IGF pour calculer le nombre d'enregistrements du fichier et la position de l'enregistrement *n*.

- le support physique des fichiers pourra consister en une mémoire EEPROM, une mémoire Flash, un disque dur ou tout support permettant de sauvegarder les informations de manière permanente. Néanmoins, elle pourra consister en mémoire RAM ou tout support permettant de sauvegarder les informations de façon temporaire.

Bien entendu l'invention concerne également un système pour la mise en oeuvre du procédé précédemment décrit ainsi que l'application dudit procédé et dudit système aux cartes à puce, aux téléphones cellulaires, aux assistants numériques personnels, aux terminaux de paiement bancaires ou aux terminaux de paiement portatifs.

Des modes de mise en oeuvre du procédé selon l'invention seront décrits ci-après à titre d'exemples non limitatifs, avec référence aux dessins annexés dans lesquels :

- la figure 1 est une représentation schématique montrant l'organisation des données persistantes d'un fichier avant et après la mise en oeuvre du procédé selon l'invention.
- Les figures 2 à 8 sont des représentations mémoire, les figures 2 à 4 étant des représentations optimales.

On rappelle tout d'abord qu'un fichier à enregistrements est composé d'un ensemble d'enregistrements qui peuvent être accédés de façon aléatoire. On distingue deux types de fichiers à enregistrements, les fichiers linéaires et les fichiers cycliques (aussi appelés fichiers circulaires). La taille d'un enregistrement peut être soit fixe soit variable (dans le deuxième cas, chaque enregistrement du fichier peut donc avoir une taille différente).

Lors de la création d'un fichier, on indique typiquement le nombre maximal d'enregistrements que peut contenir le fichier et l'espace maximal de mémoire persistante réservé au stockage des enregistrements du fichier. Lorsque le fichier contient des enregistrements de taille fixe, l'espace maximal réservé aux enregistrements du fichier peut être déduit facilement du nombre maximal d'enregistrements.

Chaque enregistrement du fichier est identifié par un numéro compris entre 1 et N, où N désigne le nombre d'enregistrements du fichier. Dans un fichier linéaire, les enregistrements sont numérotés séquentiellement depuis 1 au fur et à mesure de leur ajout. Dans un fichier cyclique, le dernier enregistrement ajouté est toujours numéroté 1 (l'ancien enregistrement 1, s'il existait, est alors renuméroté 2).

A titre d'exemple, les principales opérations relatives aux fichiers à enregistrements sont décrites dans la norme ISO/IEC 7816-4 lorsque le domaine d'application est la carte à puce :

- La lecture de l'enregistrement numéro n (commande READ RECORD);
- L'ajout d'un nouvel enregistrement (commande APPEND RECORD);
- La mise à jour de l'enregistrement numéro n (commandes WRITE RECORD et UPDATE RECORD).

Les données du fichier sont constituées :

- d'un descripteur de fichier global, qui contient typiquement des informations fixes du fichier :

  o identifiant du répertoire contenant le fichier;
  o identifiant(s) du fichier;
  o localisation en mémoire persistante de l'espace réservé pour les structures de données d'enregistrement, notée $Loc_{Base}$;
  o droit d'accès;
  o etc.

- d'un ensemble de structures de données d'enregistrement composées chacune :

  o d'un descripteur partiel d'enregistrement;
  o du contenu de l'enregistrement;

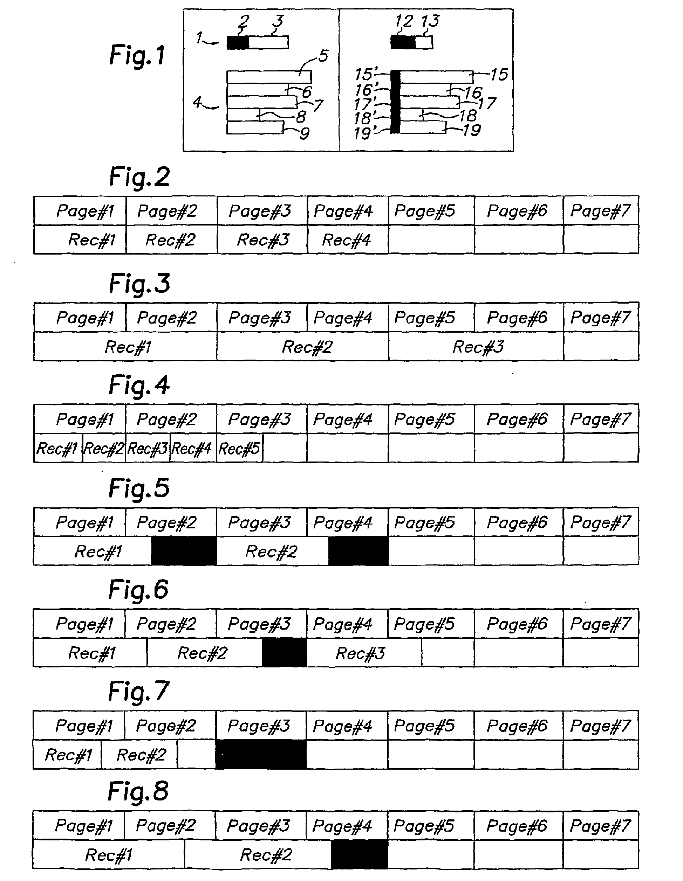

Dans l'exemple représenté sur la figure 1, la colonne de gauche montre l'organisation des données persistantes d'un fichier selon la technique classique dans lequel le descripteur global 1 contient des données fixes 2 et des données variables 3 tandis que l'espace réservé aux enregistrements 4 ne contient que des données d'enregistrement 5 à 9.

Par contre, la colonne de droite montre une organisation conforme à l'invention dans lequel le descripteur global 11 contient en plus des données fixes 12, un volume réduit de données variables 13 tandis que l'espace réservé aux enregistrements 14 contient en plus des données d'enregistrement 15 à 19, des Informations de Gestion Réparties (IGR) 15' à 19'.

Ainsi le procédé selon l'invention permet avantageusement de mettre en oeuvre les opérations sur les enregistrements qui nécessitent des modifications de ces IGR sans écriture supplémentaire dans les pages du descripteur global : les IGR étant contenues dans les mêmes pages que les enregistrements, seules ces pages doivent être modifiées.

L'espace réservé aux structures de données d'enregistrements est constitué d'un ensemble de pages contiguës en mémoire persistante. L'objet du présent brevet concerne les données de cet espace. Dans un pseudo-language de programmation, la structure de données d'enregistrement peut s'écrire de la façon suivante :

```
record {
 descriptor { // Descripteur partiel
d'enregistrement
    inf; // Information attachée à
l'enregistrement
    ...
 };
 data[]; // Contenu de l'enregistrement
};
```

Le stockage en mémoire persistante des structures de données d'enregistrement dépend de la taille d'une page.

Si les tailles de la structure de données d'enregistrement (dans l'hypothèse où les enregistrements sont de taille fixe) et d'une page sont dans un rapport entier, il existe une représentation mémoire optimale. Dans la figure 2, la taille de la structure de données d'enregistrement est identique à celle d'une page. Dans la figure 3, la taille de la structure de données d'enregistrement est deux fois plus grande que celle d'une page. Dans la figure 4, la taille de la structure de données d'enregistrement est deux fois plus petite que celle d'une page.

Si les tailles de la structure de données d'enregistrement (dans l'hypothèse où les enregistrements sont de taille fixe) et d'une page ne sont pas dans un rapport entier, ou si les enregistrements ne sont pas de taille fixe, l'une des représentations mémoire suivantes peut être utilisée.

Dans les figures 5 et 6, la taille de la structure de données d'enregistrement est considérée comme fixe et supérieure à celle d'une page sans toutefois être multiple de la taille d'une page.

Dans la figure 5, chaque structure de données d'enregistrement est alignée sur un début de page, ce qui introduit une perte d'espace (matérialisée par des hachures) entre chaque structure de données d'enregistrement. Dans la figure 6, les structures de données d'enregistrement sont organisées pour minimiser le nombre de pages utilisées pour le stockage.

Dans la figure 7, la structure de données d'enregistrement numéro 2 (Rec#2) est à cheval sur 2 pages alors la longueur de cet enregistrement est inférieure à 1 page. Dans la figure 8, la structure de données d'enregistrement numéro 2 (Rec#2) est à cheval sur 3 pages alors que la longueur de cet enregistrement est comprise entre 1 et 2 pages. Ces représentations mémoire ne sont pas optimales car la mise à jour de la structure de données d'enregistrement induit une écriture de page en plus que strictement nécessaire. Dans ces cas de figure, la représentation mémoire de la figure 5 doit être préférée.

Pour décrire la mise en oeuvre du procédé, on prend à titre d'exemple un fichier cyclique fixe dont le nombre maximal d'enregistrements est $N_{MAX}=3$ et dont la taille de la structure de données d'enregistrement est identique à celle d'une page. Le principe est généralisable à des fichiers cycliques fixes de taille arbitraire.

On note :

- $N_{MAX}$, le nombre maximal d'enregistrements dans le fichier cyclique;

- N, le nombre d'enregistrements écrits dans le fichier cyclique ( $0 \le N \le N_{MAX}$);

- Rec[i], la structure de données d'enregistrement numéro i ($0 \le i < N_{MAX}$);

- Rec[i].descriptor.inf, notée Inf[i], l'information attachée à la structure de données d'enregistrement à la position (« absolue ») i;

- $P_{RECn}$, la position absolue à l'intérieur du fichier cyclique de l'enregistrement de numéro (ou position « logique ») n ($0 \le P_{RECn} < N_{MAX}$). Si le fichier cyclique contient moins de $N_{MAX}$ enregistrements, $P_{RECn}$ est indéfini pour $n > N$;

- $P_{NEXT}$, la position absolue à l'intérieur du fichier cyclique de prochain enregistrement à ajouter ($0 \le P_{NEXT} < N_{MAX}$). Cet enregistrement deviendra le nouvel enregistrement numéro 1.

On suppose que la zone de mémoire persistante est initialement à zéro, ce qui implique que la valeur de Rec[i].Inf vaut zéro pour les enregistrements non encore occupés.

Le tableau 1 ci-après montre l'état d'un fichier cyclique après ajouts successifs d'enregistrements.

| Etat: | (0) | (1) | (2) | (3) | (4) | | | | | | | | |
|---|---|---|---|---|---|---|---|---|---|---|---|---|---|
| Rec# | indéf. | 1 | 2 | 3 | 1 | 2 | 3 | 1 | 2 | 3 | 1 | 2 | 3 |
| Inf[0] | 0 | **1** | 1 | 1 | **2** | 2 | 2 | **3** | 3 | 3 | **1** | 1 | 1 |
| Rec# | indéf. | indéf | 1 | 2 | 3 | 1 | 2 | 3 | 1 | 2 | 3 | 1 | 2 |
| Inf[1] | 0 | 0 | **1** | 1 | 1 | **2** | 2 | 2 | **3** | 3 | 3 | 1 | 1 |
| Rec# | indéf. | indéf. | indéf. | 1 | 2 | 3 | 1 | 2 | 3 | 1 | 2 | 3 | 1 |
| Inf[2] | 0 | 0 | 0 | **1** | 1 | 1 | **2** | 2 | 2 | **3** | 3 | 3 | **1** |
| | | | | | | | | | | | | | |
| $N_{MAX}$ | 3 | 3 | 3 | 3 | 3 | 3 | 3 | 3 | 3 | 3 | 3 | 3 | 3 |
| N | 0 | 1 | 2 | 3 | 3 | 3 | 3 | 3 | 3 | 3 | 3 | 3 | 3 |
| | | | | | | | | | | | | | |
| S | 0 | 1 | 2 | 3 | 4 | 5 | 6 | 7 | 8 | 9 | 7 | 5 | 3 |
| | | | | | | | | | | | | | |
| $P_{NEXT}$ | 0 | 1 | 2 | 0 | 1 | 2 | 0 | 1 | 2 | 0 | 1 | 2 | 0 |
| $P_{REC1}$ | indéf. | 0 | 1 | 2 | 0 | 1 | 2 | 0 | 1 | 2 | 0 | 1 | 2 |
| $P_{REC2}$ | indéf. | indéf. | 0 | 1 | 2 | 0 | 1 | 2 | 0 | 1 | 2 | 0 | 1 |
| $P_{REC3}$ | indéf. | indéf. | indéf. | 0 | 1 | 2 | 0 | 1 | 2 | 0 | 1 | 2 | 0 |

Le tableau 1 donne les valeurs des Inf[i], $N_{MAX}$, N, S, $P_{NEXT}$ et des $P_{RECi}$ pour un fichier cyclique initialement vide et contenant $N_{MAX}$=3 enregistrements au maximum. Les valeurs en gras indiquent la nouvelle valeur prise par Inf [i] lors de l'ajout d'un nouvel enregistrement, selon l'équation 1, ci après calcul de Inf[i] lors de l'ajout d'un nouvel enregistrement :

$$\text{Inf[i]} := 1 + (\text{Inf[i] mod } N_{MAX})$$

Initialement, dans l'état (0), le fichier cyclique est vide. Le nombre d'enregistrements N vaut 0 et les trois positions (absolues) 0, 1 et 2 du fichier cyclique sont disponibles. La prochaine position disponible $P_{NEXT}$ pour un ajout d'enregistrement est la position 0.

Dans l'état (1), après ajout du premier enregistrement à la position 0, le nombre d'enregistrements N vaut 1 et les deux positions (absolues) 1 et 2 du fichier cyclique sont disponibles. La position absolue $P_{REC1}$ de l'enregistrement numéro 1 vaut 0 et la prochaine position disponible $P_{NEXT}$ pour un ajout d'enregistrement est la position 1.

Dans l'état (2), après ajout du deuxième enregistrement à la position 1, le nombre d'enregistrements N vaut 2 et la position 2 du fichier cyclique est disponible. La position $P_{REC1}$ de l'enregistrement numéro 1 vaut 1, celle $P_{REC2}$ de l'enregistrement numéro 2 vaut 0, et la prochaine position disponible $P_{NEXT}$ pour un ajout d'enregistrement est la position 2.

Dans l'état (3), après ajout du troisième enregistrement à la position 2, le nombre d'enregistrements N vaut 3 et toutes les positions du fichier cyclique sont occupées. La position $P_{REC1}$ de l'enregistrement numéro 1 vaut 2, celle $P_{REC2}$ de l'enregistrement numéro 2 vaut 1, celle $P_{REC3}$ de l'enregistrement numéro 3 vaut 0, et la prochaine position disponible $P_{NEXT}$ pour un ajout d'enregistrement est la position 0.

Dans la mise en oeuvre du procédé, à chaque emplacement de structure de données d'enregistrement Rec [i] (avec $0 \le i \le N - 1$), on attache une information Rec[i].descriptor.inf notée Inf[i] permettant de calculer les informations N, $P_{RECn}$ ($0 \le n \le N$) et $P_{NEXT}$, selon le processus développé ci-après :

On calcule tout d'abord une quantité S représente la somme arithmétique des informations Inf de la totalité des structures de données d'enregistrement réservées pour le fichier cyclique, y compris aux positions non occupées pour lesquelles la valeur de Rec[i].Inf est zéro. Dans le tableau 1, cette valeur est écrite sur les lignes dont l'entête est Rec[i].Inf. On a $0 \le$ Rec[i].Inf $< N_{MAX}$. Le calcul de cette quantité S est réalisé selon la formule suivante (équation 2) :

$$S = \sum_{i=0}^{i<N_{MAX}} Inf[i]$$

A partir de la valeur de S, on peut déterminer les informations suivantes :

- Le nombre d'enregistrements du fichier : N;
- La position du prochain enregistrement disponible : $P_{NEXT}$;
- La position de l'enregistrement numéro $n$ (avec $1 \leq n \leq N$) : $P_{RECn}$.

Le nombre d'enregistrements du fichier est déterminé grâce à l'équation 3 suivante :

$$\text{Si } S < N_{MAX}, \text{ alors } N := S$$

$$\text{Si } S \geq N_{MAX}, \text{ alors } N := N_{MAX}$$

La position du prochain enregistrement disponible est déterminée grâce à l'équation 4 suivante :

$$P_{NEXT} := S \bmod N_{MAX}$$

La position de l'enregistrement numéro $n$ (avec $1 \leq n \leq N$) est déterminée grâce à l'équation 5 suivante :

$$P_{RECn} := (S - n) \bmod N_{MAX}$$

Dans l'exemple ci-après, on considère un fichier cyclique fixe dont le nombre maximal d'enregistrements est $N_{MAX}$ et dont la longueur des enregistrements $L_{REC}$ est multiple de la taille d'une page. L'espace réservé pour ce fichier est situé à l'emplacement $Loc_{Base}$. La longueur de cet espace réservé est $N_{MAX} * L_{REC}$.

La Localisation de l'emplacement des données de l'enregistrement de position i est donnée par l'équation 6 ci-après :

$$Loc_i := Loc_{Base} + i * L_{REC} \qquad (\text{avec } 0 \leq i \leq N_{MAX})$$

Dans le cas où la longueur des enregistrements $L_{REC}$ n'est pas multiple de la taille d'une page des informations de chaînage peuvent être intégrées de façon à mettre en oeuvre les représentations des Figures 5 et 6.

Initialement, le fichier est soit vide (c'est à dire qu'il ne contient aucun enregistrement), soit non vide (c'est à dire qu'il contient au moins un enregistrement). Quel que soit l'état initial du fichier cyclique, les informations attachées aux enregistrements initiaux du fichier (Inf[i]) doivent être celles de l'une des configurations décrites dans le tableau 1.

La lecture de l'enregistrement consiste tout d'abord à vérifier la validité de $n$, ensuite à localiser l'emplacement des données de l'enregistrement numéro $n$, enfin de lire les données ainsi localisées.

Paramètre d'entrée :

- $n$, numéro de l'enregistrement à lire

Paramètre de sortie :

- Données de l'enregistrement numéro $n$

Conditions d'erreur:

- Paramètre *n* invalide

La lecture de l'enregistrement numéro n peut s'effectuer selon l'algorithme suivant :

- Calculer la quantité S, selon l'équation 2;
- Calculer le nombre d'enregistrements du fichier, N, selon l'équation 3;
- Si *n* ne satisfait pas $1 \leq n \leq N$, alors aller en erreur (paramètre n invalide);
- Calculer la position de l'enregistrement *n*, $P_{RECn}$, selon l'équation 5;
- Calculer l'emplacement des données à la position $P_{RECn}$, selon l'équation 6 (avec $i = P_{RECn}$) ou à l'aide d'informations de chaînage figurant dans les IGF;
- Retourner les données $Rec[P_{RECn}]$.data

L'ajout d'un nouvel enregistrement consiste tout d'abord à localiser l'emplacement des données du prochain enregistrement disponible, ensuite à copier les données du nouvel enregistrement vers l'emplacement localisé

Paramètre d'entrée :

- *data*, données à ajouter

Paramètre de sortie :

- néant

Conditions d'erreur :

- Longueur des données invalide

Cet ajout d'un nouvel enregistrement peut s'effectuer selon l'algorithme suivant :

- Si la longueur de *data* est différente de $L_{REC}$, alors aller en erreur (longueur des données invalides);
- Calculer la quantité S, selon l'équation 2;
- Calculer la position du prochain emplacement disponible, $P_{NEXT}$, d'après l'équation 4;
- Calculer l'emplacement des données à la position $P_{NEXT}$, selon l'équation 6 (avec $i = P_{NEXT}$) ou à l'aide d'informations de chaînage figurant dans les IGF;
- Ecrire de façon atomique les données suivantes :

$Rec[P_{NEXT}]$.descriptor.inf := 1 + $Rec[P_{NEXT}]$.descriptor.inf mod $N_{MAX}$
$Rec[P_{NEXT}]$.data := *data*

L'ajout d'un nouvel enregistrement consiste tout d'abord à localiser l'emplacement des données de l'enregistrement numéro *n*, ensuite à mettre à jour les données.

Paramètre d'entrée :

- *n*, numéro de l'enregistrement à mettre à jour ($n \geq 0$)
- *data*, données à mettre à jour

Paramètre de sortie :

- néant

Conditions d'erreur:

- Paramètre *n* invalide

- Longueur des données invalide

La mise à jour de l'enregistrement numéro n peut s'effectuer selon l'algorithme suivant :

- Calculer la quantité S, selon l'équation 2;
- Calcul du nombre d'enregistrements du fichier, N, selon l'équation 3;
- Si *n* ne satisfait pas $1 \leq n \leq N$, alors aller en erreur (paramètre *n* invalide);
- Si la longueur de *data* est différente de $L_{REC}$, alors aller en erreur (longueur des données invalides);
- Calculer la position de l'enregistrement *n*, $P_{RECn}$, selon l'équation 5;
- Calculer l'emplacement des données à la position $P_{RECn}$, selon l'équation 6 (avec i = $P_{RECn}$) ou à l'aide d'informations de chaînage figurant dans les IGF;
- Ecrire de façon atomique les données suivantes : $Rec[P_{RECn}].data := data$

Il apparaît donc que ces processus d'enregistrements et de mise à jour s'opère avec un nombre minimum d'écritures de pages.

## Revendications

1. Procédé de gestion de fichiers à enregistrements sur des supports physiques **caractérisé en ce qu'**il comprend :

   a) l'inscription de certaines informations de gestion de fichiers, dites IGR, dans des zones de mémoire contiguës aux enregistrements du fichier ;
   b) l'utilisation des IGR lors des opérations d'accès au fichier ;
   c) la mise à jour de certaines IGR lors des opérations de modification de fichier, étant entendu que, du fait que les IGF sont contenues dans les mêmes pages que les enregistrements, seules ces pages sont modifiées.

2. Procédé de gestion de fichiers à enregistrements sur des supports physiques selon la revendication 1, **caractérisé en ce que** lesdits fichiers sont des fichiers cycliques et lesdites IGR comportent des informations permettant de calculer la position du dernier enregistrement ajouté et/ou le nombre d'enregistrements effectifs et/ou la localisation en mémoire d'un enregistrement du fichier.

3. Procédé de gestion de fichiers à enregistrements sur des supports physiques selon la revendication 2, **caractérisé en ce que** l'IGR associée à un enregistrement de position i dans le fichier comporte une information Inf[i] positionnée initialement à zéro et modifiée, lors de l'ajout d'un nouvel enregistrement à la position i en appliquant le calcul Inf[i] := 1 + (Inf[i] mod $N_{MAX}$), $N_{MAX}$ étant le nombre maximal d'enregistrements dans le fichier cyclique.

4. Procédé de gestion de fichiers à enregistrements sur des supports physiques selon la revendication 3, **caractérisé en ce que** le nombre d'enregistrements effectifs dans le fichier est calculé en appliquant l'équation suivante :

$$\text{Si } S < N_{MAX}, \text{ alors } N := S$$

$$\text{Si } S \geq N_{MAX}, \text{ alors } N := N_{MAX}$$

la valeur S étant calculée en appliquant l'équation suivante :

$$S = \sum_{i=0}^{i<N_{MAX}} Inf\ [i]$$

5. Procédé de gestion de fichiers à enregistrements sur des supports physiques selon la revendication 3, **caractérisé en ce que** la position du prochain enregistrement disponible est calculée en appliquant l'équation suivante :

$$P_{NEXT} := S \bmod N_{MAX}$$

6. Procédé de gestion de fichiers à enregistrements sur des supports physiques selon la revendication 3, **caractérisé en ce que** la position de l'enregistrement de numéro *n* est calculée en appliquant l'équation suivante.

$$P_{RECn} := (S - n) \bmod N_{MAX}$$

7. Procédé de gestion de fichiers à enregistrements sur des supports physiques selon la revendication 1, **caractérisé en ce que** les enregistrements du fichier sont répartis en mémoire de sorte que la zone de mémoire contenant un enregistrement d'une taille *t* ne chevauche jamais plus de *[(t/m)]* pages physiques où *m* représente la taille d'une page physique et *[(t/m)]* désigne la plus petite valeur entière supérieure ou égale à *t/m*.

8. Procédé de gestion de fichiers à enregistrements sur des supports physiques selon la revendication 1, **caractérisé en ce qu'**une opération de lecture d'un enregistrement de numéro *n* comporte l'utilisation des IGR pour calculer le nombre d'enregistrements du fichier et la position de l'enregistrement *n*.

9. Procédé de gestion de fichiers à enregistrements sur des supports physiques selon la revendication 1, **caractérisé en ce qu'**une opération d'ajout d'un nouvel enregistrement comporte l'utilisation des IGR pour calculer la position du prochain emplacement disponible.

10. Procédé de gestion de fichiers à enregistrements sur des supports physiques selon la revendication 1, **caractérisé en ce qu'**une opération de mise à jour d'un enregistrement de numéro n comporte l'utilisation des IGR pour calculer le nombre d'enregistrements du fichier et la position de l'enregistrement *n*.

11. Procédé de gestion de fichiers à enregistrements sur des supports physiques selon la revendication 3, **caractérisé en ce qu'**une opération de lecture d'un enregistrement de numéro *n* comporte les étapes suivantes :

Calcul de la quantité S, selon l'équation suivante :

$$S = \sum_{i=0}^{i<N_{MAX}} Inf\ [i]$$

• Calcul du nombre d'enregistrements du fichier, N, selon l'équation suivante :

$$\text{Si } S < N_{MAX}, \text{ alors } N := S$$

$$\text{Si } S \geq N_{MAX}, \text{ alors } N := N_{MAX}$$

• Si *n* ne satisfait pas $1 \leq n \leq N$, alors erreur (paramètre *n* invalide); sinon :
• Calcul de la position de l'enregistrement *n*, $P_{RECn}$, selon l'équation suivante :

$$P_{RECn} := (S - n) \bmod N_{MAX}$$

• Calcul de l'emplacement des données à la position $P_{RECn}$, selon l'équation suivante :

$$Loc_i := Loc_{Base} + i * L_{REC} \quad avec \; i = P_{RECn}$$

ou à l'aide d'informations de chaînage figurant dans les IGR;
• Retour du résultat de la lecture : donnée $Rec[P_{RECn}].data$

**12.** Procédé de gestion de fichiers à enregistrements sur des supports physiques selon la revendication 3, **caractérisé en ce qu'**une opération d'ajout d'un nouvel enregistrement comporte les étapes suivantes :

Si la longueur de *data* est différente de $L_{REC}$, alors aller en erreur (longueur des données invalides);
Calcul de la quantité S, selon l'équation suivante :

$$S = \sum_{i=0}^{i<N_{MAX}} Inf[i]$$

• Calcul de la position du prochain emplacement disponible, $P_{NEXT}$, d'après l'équation suivante :

$$P_{NEXT} := S \bmod N_{MAX}$$

• Calcul de l'emplacement des données à la position $P_{NEXT}$, selon l'équation suivante :

$$Loc_i := Loc_{Base} + i * L_{REC} \qquad avec \; i = P_{NEXT}$$

ou à l'aide d'informations de chaînage figurant dans les IGR;
• Ecriture de façon atomique des données suivantes :

$$Rec[P_{NEXT}].descriptor.inf := 1 + Rec[P_{NEXT}].descriptor.inf \bmod N_{MAX}$$

$$Rec[P_{NEXT}].data := data$$

**13.** Procédé de gestion de fichiers à enregistrements sur des supports physiques selon la revendication 3, **caractérisé en ce qu'**une opération de mise à jour d'un enregistrement de numéro n comporte les étapes suivantes :

• Calcul de la quantité S, selon l'équation suivante :

$$S = \sum_{i=0}^{i<N_{MAX}} Inf[i]$$

• Calcul du nombre d'enregistrements du fichier, N, selon l'équation suivante :

$$\text{Si } S < N_{MAX}, \text{ alors } N := S$$

$$\text{Si } S \geq N_{MAX}, \text{ alors } N := N_{MAX}$$

• Si $n$ ne satisfait pas $1 \leq n \leq N$, alors erreur (paramètre $n$ invalide);
sinon :
• Si la longueur de *data* est différente de $L_{REC}$, alors erreur (longueur des données invalides); sinon :
• Calcul de la position de l'enregistrement $n$, $P_{RECn}$, selon l'équation suivante :

$$P_{RECn} := (S - n) \bmod N_{MAX}$$

• Calcul de l'emplacement des données à la position $P_{RECn}$, selon l'équation suivante :

$$Loc_i := Loc_{Base} + i * L_{REC} \qquad \text{avec } i = P_{RECn}$$

ou à l'aide d'informations de chaînage figurant dans les IGR;
• Ecriture de façon atomique des données suivantes :

$$Rec[P_{RECn}].data := data$$

**14.** Procédé de gestion de fichiers à enregistrements sur des supports physiques selon la revendication 1, **caractérisé en ce que** le support physique des fichiers est une mémoire EEPROM, une mémoire Flash, un disque dur ou tout support permettant de sauvegarder les informations de manière permanente.

**15.** Procédé de gestion de fichiers cyclique à enregistrements sur des supports physiques selon la revendication 1, caractérisé en ce le support physique des fichiers est une mémoire RAM ou tout support permettant de sauvegarder les informations de manière temporaire.

**16.** Système assurant la gestion de fichiers à enregistrements sur des supports conformément au procédé selon l'une des revendications précédentes.

**17.** Application du procédé selon l'une quelconque des revendications 1 à 15, à une carte à puce, à un téléphone cellulaire, à un assistant numérique personnel, à un terminal de paiement bancaire ou à un terminal de paiement portatif.

**18.** Application du système selon la revendication 16, à une carte à puce, à un téléphone cellulaire, à un assistant numérique personnel, à un terminal de paiement bancaire ou à un terminal de paiement portatif.

**Claims**

**1.** A method for managing data files recorded on physical media, **characterised in that** it comprises:

    a) the writing of some file management information, called IGRs, in memory zones contiguous with file records;
    b) the use of IGRs during file access operations;
    c) the updating of some IGRs during file modification operations, it being understood that because the IGRs are contained in the same pages as the records, only these pages are modified.

**2.** A method for managing data files recorded on physical media according to claim 1, **characterised in that** the said files are cyclical files and the said IGRs comprise information for calculating the position of the last record added and/or the number of effective records and/or the location in the memory of a record of the file.

3. A method for managing data files recorded on physical media according to claim 2, **characterised in that** the IGR associated with a record with the position i in the file comprises information Inf[i] initially set to zero and modified while adding a new record to position i by applying the calculation Infi[i]: = 1 + (Inf[i] mod $N_{MAX}$), where $N_{MAX}$ is the maximum number of records in the cyclical file.

4. A method for managing data files recorded on physical media according to claim 3, **characterised in that** the number of effective records in the file is calculated by applying the following equation:

$$\text{If } S < N_{MAX}, \text{ then } N: = S$$

$$\text{If } S \geq N_{MAX}, \text{ then } N: = N_{MAX}$$

Where the value S is calculated by applying the equation below:

$$S = \sum_{i=0}^{i < N_{MAX}} Inf\ [i]$$

5. A method for managing data files recorded on physical media according to claim 3, **characterised in that** the position of the next available record is calculated by applying the following equation:

$$P_{NEXT}: = S \text{ mod } N_{MAX}$$

6. A method for managing data files recorded on physical media according to claim 3, **characterised in that** the position of the number $n$ record is calculated by applying the following equation.

$$P_{RECn}: = (S\text{-}n) \text{ mod } N_{MAX}$$

7. A method for managing data files recorded on physical media according to claim 1, **characterised in that** the file records are distributed in the memory so that the memory zone containing a record with a size $t$ never overlaps more than $[(t/m)]$ physical pages where $m$ is the size of a physical page and $[(t/m)]$ designates the smallest integer that is equal to or greater than $t/m$.

8. A method for managing data files recorded on physical media according to claim 1, **characterised in that** an operation for reading a number $n$ record comprises the use of IGRs to calculate the number of records of the file and the position of record $n$.

9. A method for managing data files recorded on physical media according to claim 1, **characterised in that** an operation for adding a new record comprises the use of IGRs to calculate the position of the next available location.

10. A method for managing data files recorded on physical media according to claim 1, **characterised in that** an operation for updating a number n record comprises the use of IGRs to calculate the number of records of the file and the position of record $n$.

11. A method for managing data files recorded' on physical media according to claim 3, **characterised in that** an operation for reading a number $n$ record comprises the following stages:

Calculation of the quantity S, according to the equation below:

$$S = \sum_{i=0}^{i < N_{MAX}} Inf\ [i]$$

• Calculation of the number of records of the file, N, according to the equation below:

$$\text{If } S < N_{MAX}, \text{ then } N: = S$$

$$\text{If } S \geq N_{MAX}, \text{ then } N: = N_{MAX}$$

• If n does not meet $1 \leq n \leq N$, then error (parameter $n$ not valid); otherwise:
• Calculation of the position of the record $n$, $P_{RECn}$, according to the following equation:

$$P_{RECn}: = (S\text{-}n) \bmod N_{MAX}$$

• Calculation of the location of the data in the position $P_{RECn}$, according to the following equation:

$$\text{Loc}_i := \text{Loc}_{Base} + i * L_{REC} \text{ where } i = P_{RECn}$$

Or with the help of chaining information included in the IGRs;
• Return to the result of reading: data $\text{Rec}[P_{RECn}]$.data

12. A method for managing data files recorded on physical media according to claim 3, **characterised in that** an operation for adding a new record comprises the following stages:

If the length of *data* is different from $L_{REC}$, then go into error (data length not valid);
Calculation of the quantity S, according to the equation below:

$$S = \sum_{i=0}^{i<N_{MAX}} Inf[i]$$

• Calculation of the position of the next available location, $P_{NEXT}$, according to the equation below:

$$P_{NEXT}: = S \bmod N_{MAX}$$

• Calculation of the location of the data in the position $P_{NEXT}$, according to the equation below:

$$\text{Loc}_i := \text{Loc}_{Base} + i * L_{REC} \text{ where } i = P_{NEXT}$$

Or with the help of chaining information included in the IGRs;
• Atomic writing of the following data:

$$\text{Rec}[P_{NEXT}].\text{descriptor.inf}: = 1 + \text{Rec}[P_{NEXT}].\text{descriptor. inf} \bmod N_{MAX}$$

$$\text{Rec}[P_{NEXT}].\text{data}:= data$$

13. A method for managing data files recorded on physical media according to claim 3, **characterised in that** an operation for updating a number $n$ record comprises the following stages:

Calculation of the quantity S, according to the following equation:

$$S = \sum_{i=0}^{i<N_{MAX}} Inf[i]$$

• Calculation of the number of records of the file, N, according to the following equation:

$$\text{If } S < N_{MAX}, \text{ then } N: = S$$

$$\text{If } S \geq N_{MAX}, \text{ then } N: = N_{MAX}$$

• If $n$ does not meet $1 \leq n \leq N$, then error (parameter $n$ riot valid); otherwise:
• If the length of *data* is different from $L_{REC}$, then error (data length not valid); otherwise:
• Calculation of the position of the record $n$, $P_{RECn}$, according to the following equation: ,

$$P_{RECn}: = (S\text{-}n) \bmod N_{MAX}$$

• Calculation of the location of the data in the position $P_{RECn}$, according to the following equation:

$$Loc_i := Loc_{Base} + i * L_{REC} \text{ where } i = P_{RECn}$$

Or with the help of chaining information included in the IGRs;
• Atomic writing of the following data: $Rec[P_{RECn}].data := data$

14. A method for managing data files recorded on physical media according to claim 1, **characterised in that** the physical medium of the files is an EEPROM memory, a Flash memory, a hard drive or any medium that makes it possible to save information permanently.

15. A method for managing cyclical data files recorded on physical media according to claim 1, **characterised in that** the physical medium of the files is a RAM memory or any medium that makes it possible to save information temporarily.

16. A system for managing data files recorded on media in accordance with the method according to any of the claims above.

17. The application of the method according to any of claims 1 to 15 to a smart card, a cellular telephone, a personal digital assistant, a bank payment terminal or a portable payment terminal.

18. The application of the system according to claim 16 to a smart card, a cellular telephone, a personal digital assistant, a bank payment terminal or a portable payment terminal.

**Patentansprüche**

1. Verfahren zur Dateiverwaltung mit Aufzeichnungen auf körperliche Träger, **dadurch gekennzeichnet, dass** es umfasst:

a) die Eintragung von gewissen Informationen zur Dateiverwaltung, sogenannte IGR in die die Aufzeichnungen der Datei angrenzenden Speicherbereiche;
b) die Benutzung der IGR bei den Zugriffsvorgängen auf die Datei;
c) die Aktualisierung gewisser IGR bei den in der Datei durchgeführten Änderungen, wobei da die IGR in denselben Seiten wie die Aufzeichnungen enthalten sind, nur diese Seiten geändert werden.

2. Verfahren zur Dateiverwaltung mit Aufzeichnungen auf körperliche Träger nach Anspruch 1, **dadurch gekennzeichnet, dass** die genannten Dateien zyklische Dateien sind und die genannten IGR Informationen umfassen, die es ermöglichen, die Position der letzten zugefügten Aufzeichnung und/oder die Anzahl der tatsächlichen Aufzeichnungen und/oder die Stelle im Speicher einer Aufzeichnung der Datei zu berechnen

3. Verfahren zur Dateiverwaltung mit Aufzeichnungen auf körperliche Träger nach Anspruch 2, **dadurch gekennzeichnet, dass** die einer Aufzeichnung an Position i in der Datei zugewiesene IGR eine Information Inf[i] aufweist, die Ausgangs bei Null positioniert ist und bei Zufügung einer neuen Aufzeichnung bei der Position I, durch Anwendung der Berechnung Inf[i] := 1 + (Inf[i] lid $N_{MAX}$) geändert wurde, wobei $N_{MAX}$ die Maximalanzahl der Aufzeichnungen in der zyklischen Datei ist.

4. Verfahren zur Dateiverwaltung mit Aufzeichnungen auf körperliche Träger nach Anspruch 3, **dadurch gekennzeichnet, dass** die Anzahl der tatsächlich in der Datei vorhandenen Dateien durch Anwendung der folgenden Gleichung berechnet wird:

$$\text{Falls } S < N_{MAX}, \text{ dann } N := S$$

$$\text{Falls } S \geq N_{MAX}, \text{ dann } N := N_{MAX}$$

wobei der Wert S durch Anwendung der folgenden Gleichung berechnet wird:

$$S = \sum_{i=0}^{i < N_{MAX}} Inf\ [i]$$

5. Verfahren zur Dateiverwaltung mit Aufzeichnungen auf körperliche Träger nach Anspruch 3, **dadurch gekennzeichnet; dass** die Position der folgenden verfügbaren Aufzeichnung durch Anwendung der folgenden Gleichung berechnet wird:

$$P_{NEXT} := S \bmod N_{MAX}$$

6. Verfahren zur Dateiverwaltung mit Aufzeichnungen auf körperliche Träger nach Anspruch 3, **dadurch gekennzeichnet, dass** die Position der Aufzeichnung mit Nummer *n* durch Anwendung der folgenden Gleichung berechnet wird:

$$P_{RECn} := (S - n) \bmod N_{MAX}$$

7. Verfahren zur Dateiverwaltung mit Aufzeichnungen auf körperliche Träger nach Anspruch 1, **dadurch gekennzeichnet, dass** die Aufzeichnungen der Datei im Speicher derart verteilt sind, dass der eine Aufzeichnung von Größe *t* enthaltende Speicherbereich, nie mehr als *[(t/m)]* körperliche Seiten überdeckt, wobei *m* die Größe einer körperlichen Seite und *[(t/m)]* die, kleinste Ganzzahl großer oder gleich *t/m* darstellt.

8. Verfahren zur Dateiverwaltung mit Aufzeichnungen auf körperliche Träger nach Anspruch 1, **dadurch gekennzeichnet, dass** ein Lesevorgang einer Aufzeichnung mit Nummer *n* den Einsatz der IGR umfasst, zur Berechnung der Anzahl der Dateiaufzeichnungen sowie der Position der Aufzeichnung *n*.

9. Verfahren zur Dateiverwaltung mit Aufzeichnungen auf körperliche Träger nach Anspruch 1, **dadurch gekennzeichnet, dass** ein Zufügungsvorgang einer neuen Aufzeichnung den Einsatz der IGR umfasst, zur Berechnung der Position der nächsten verfügbaren Stelle.

**10.** Verfahren zur Dateiverwaltung mit Aufzeichnungen auf körperliche Träger nach Anspruch 1, **dadurch gekennzeichnet, dass** ein Aktualisierungsvorgang einer Aufzeichnung mit Nummer *n* den Einsatz der IGR umfasst, zur Berechnung der Anzahl der Dateiaufzeichnungen sowie der Position der Aufzeichnung *n*.

**11.** Verfahren zur Dateiverwaltung mit Aufzeichnungen auf körperliche Träger nach Anspruch 3, **dadurch gekennzeichnet, dass** ein Vorgang des Auslesens einer Aufzeichnung mit Nummer *n* die folgenden Schritte umfasst:

Berechnung der Menge S, gemäß folgender Gleichung:

$$S = \sum_{i=0}^{i < N_{MAX}} Inf\ [i]$$

• Berechnung der Anzahl der Dateiaufzeichnungen N, nach folgender Gleichung:

$$\text{Falls } S < N_{MAX}, \text{ dann } N := S$$

$$\text{Falls } S \geq N_{MAX}, \text{ dann } N := N_{MAX}$$

• Wenn *n* nicht $1 \leq n$ $1 \leq N$ entspricht, dann liegt ein Fehler vor (Parameter *n* ist ungültig); ansonsten
• Berechnung der Position der Aufzeichnung n, $P_{REC n}$, gemäß folgender Gleichung:

$$P_{REC n} := (S - n) \bmod N_{MAX}$$

• Berechnung der Stelle der Daten bei der Position $P_{REC n}$, gemäß folgender Gleichung :

$$Loc_i := Loc_{Base} + i * L_{REC} \quad \text{avec } i = P_{REC n}$$

oder mit Hilfe von in den IGR abgebildeten Verknüpfungsinformationen ;

• Feedback des Leseergebnisses : Datum $Rec[P_{REC n}].data$

**12.** Verfahren zur Dateiverwaltung mit Aufzeichnungen auf körperliche Träger nach Anspruch 3, **dadurch gekennzeichnet, dass** ein Zufügungsvorgang einer neuen Aufzeichnung die folgenden Schritten umfasst:

Wenn die Länge von *data* von LREC verschieden ist, dann in Fehler übergehen (Datenlänge ist ungültig); Berechnung der Menge S, gemäß folgender Gleichung:

$$S = \sum_{i=0}^{i < N_{MAX}} Inf[i]$$

• Berechnung der Position der nächsten verfügbaren Stelle, $P_{NEXT}$, nach folgender Gleichung:

$$P_{NEXT} := S \bmod N_{MAX}$$

• Berechnung der Stelle der Daten bei der Position $P_{NEXT}$, gemäß folgender Gleichung:

$$Loc_i := Loc_{Base} + i * L_{REC} \qquad \text{mit } I = P_{NEXT}$$

oder mit Hilfe von in den IGR abgebildeten Verknüpfungsinformationen ;

• Atomares Schreiben der folgenden Daten :

$$Rec[P_{NEXT}].descriptor.inf := 1 + Rec[P_{NEXT}].descriptor.inf \bmod N_{MAX}$$

$$Rec[P_{NEXT}].data := data$$

13. Verfahren zur Dateiverwaltung mit Aufzeichnungen auf körperliche Träger nach Anspruch 3, **dadurch gekennzeichnet, dass** ein Aktualisierungsvorgang einer Aufzeichnung mit Nummer *n* die folgenden Schritte umfasst:

• Berechnung der Menge S, gemäß folgender Gleichung:

$$S = \sum_{i=0}^{i<Nmax} Inf[i]$$

• Berechnung der Anzahl der Dateiaufzeichnungen, N, gemäß folgender Gleichung :

$$\text{Falls } S < N_{MAX}, \text{ dann } N := S$$

$$\text{Falls } S \geq N_{MAX}, \text{ dann } N := N_{MAX}$$

• Wenn *n* nicht $1 \leq n$ $1 \leq N$ entspricht, dann liegt ein Fehler vor (Parameter *n* ist ungültig); ansonsten :
• Wenn die Länge von *data* von $L_{REC}$ verschieden ist, dann liegt ein Fehler vor (Datenlänge ist ungültig); ansonsten
• Berechnung der Position der Aufzeichnung n, $P_{RECn}$, gemäß folgender Gleichung:

$$P_{RECn} := (S - n) \bmod N_{MAX}$$

• Berechnung der Stelle der Daten bei der Position $P_{RECn}$, gemäß folgender Gleichung:

$$Loc_i := Loc_{Base} + i * L_{REC}$$

oder mit Hilfe von in den IGR abgebildeten Verknüpfungsinformationen ;
• Atomares Schreiben der folgenden Daten :

$$Rec[P_{RECn}].data := data$$

14. Verfahren zur Dateiverwaltung mit Aufzeichnungen auf körperliche Träger nach Anspruch.i, **dadurch gekennzeichnet, dass** der körperliche Dateiträger ein EEPROM-Speicher, ein Flash-Speicher, eine Festplatte oder ein beliebiger Träger ist, der eine beständige Datensicherung ermöglicht.

15. Verfahren zur Dateiverwaltung von zyklischen Dateien mit Aufzeichnungen auf körperliche Träger nach Anspruch 1, **dadurch gekennzeichnet, dass** der körperliche Datenträger ein RAM-Speicher oder ein beliebiger Träger ist, der eine vorübergehende Datensicherung ermöglicht.

16. System zur Dateiverwaltung mit Aufzeichnungen auf Träger gemäß dem Verfahren nach einem der vorangehenden Ansprüche.

17. Anwendung des Verfahrens nach einem der Ansprüche 1 bis 15 auf einer Chipkarte, einem Handy, einem PDA, einem Bankzahlungsterminal, oder einem tragbaren Zahlungsterminal.

18. Anwendung des Verfahrens nach Anspruch 16 auf einer Chipkarte, einem Handy, einem PDA, einem Bankzahlungsterminal, oder einem tragbaren Zahlungsterminal.

**Fig.1**

**Fig.2**

| Page#1 | Page#2 | Page#3 | Page#4 | Page#5 | Page#6 | Page#7 |
|--------|--------|--------|--------|--------|--------|--------|
| Rec#1 | Rec#2 | Rec#3 | Rec#4 | | | |

**Fig.3**

| Page#1 | Page#2 | Page#3 | Page#4 | Page#5 | Page#6 | Page#7 |
|--------|--------|--------|--------|--------|--------|--------|
| Rec#1 | | Rec#2 | | Rec#3 | | |

**Fig.4**

| Page#1 | Page#2 | Page#3 | Page#4 | Page#5 | Page#6 | Page#7 |
|--------|--------|--------|--------|--------|--------|--------|
| Rec#1 Rec#2 Rec#3 Rec#4 Rec#5 | | | | | | |

**Fig.5**

| Page#1 | Page#2 | Page#3 | Page#4 | Page#5 | Page#6 | Page#7 |
|--------|--------|--------|--------|--------|--------|--------|
| Rec#1 | | Rec#2 | | | | |

**Fig.6**

| Page#1 | Page#2 | Page#3 | Page#4 | Page#5 | Page#6 | Page#7 |
|--------|--------|--------|--------|--------|--------|--------|
| Rec#1 | Rec#2 | | Rec#3 | | | |

**Fig.7**

| Page#1 | Page#2 | Page#3 | Page#4 | Page#5 | Page#6 | Page#7 |
|--------|--------|--------|--------|--------|--------|--------|
| Rec#1 | Rec#2 | | | | | |

**Fig.8**

| Page#1 | Page#2 | Page#3 | Page#4 | Page#5 | Page#6 | Page#7 |
|--------|--------|--------|--------|--------|--------|--------|
| Rec#1 | | Rec#2 | | | | |